(19) **Europäisches Patentamt / European Patent Office / Office européen des brevets**

(11) **EP 2 503 750 B1**

(12) **FASCICULE DE BREVET EUROPEEN**

(45) Date de publication et mention
de la délivrance du brevet:
**20.08.2014 Bulletin 2014/34**

(51) Int Cl.:
*H04L 27/26* (2006.01)     *H04L 25/02* (2006.01)

(21) Numéro de dépôt: **12161164.4**

(22) Date de dépôt: **26.03.2012**

(54) **Procédé de traitement d'un signal multiporteuses à bancs de filtre pour la synchronisation par préambule**

Verarbeitungsverfahren eines Multicarrier-Signals mit Filterbänken für die Präambelsynchronisation

Method for processing a multicarrier signal with arrays of filters for synchronisation by preamble

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2011 FR 1152481**

(43) Date de publication de la demande:
**26.09.2012 Bulletin 2012/39**

(73) Titulaire: **Commissariat à l'Énergie Atomique et aux Énergies Alternatives
75015 Paris (FR)**

(72) Inventeur: **Berg, Vincent
38240 MEYLAN (FR)**

(74) Mandataire: **Regimbeau
20, rue de Chazelles
75847 Paris Cedex 17 (FR)**

(56) Documents cités:
- STITZ T H ET AL: "Practical issues in frequency domain synchronization for filter bank based multicarrier transmission", COMMUNICATIONS, CONTROL AND SIGNAL PROCESSING, 2008. ISCCSP 2008. 3RD INTERNATIONAL SYMPOSIUM ON, IEEE, PISCATAWAY, NJ, USA, 12 mars 2008 (2008-03-12), pages 411-416, XP031269104, ISBN: 978-1-4244-1687-5
- HU S ET AL: "Preamble Design with ICI Cancellation for Channel Estimation in OFDM/OQAM System", IEICE TRANSACTIONS ON COMMUNICATIONS, COMMUNICATIONS SOCIETY, TOKYO, JP, vol. E93B, no. 1, 1 janvier 2010 (2010-01-01), pages 211-214, XP001552510, ISSN: 0916-8516, DOI: 10.1587/TRANSCOM.E93.B.211

**Description**

DOMAINE TECHNIQUE GENERAL

L'invention concerne le domaine des communications numériques multiporteuses à banc de filtres (en anglais « *FilterBank MultiCarrier* », (FBMC)) et concerne plus particulièrement la synchronisation du préambule de formes d'ondes OFDM/OQAM (en anglais, « *Orthogonal Frequency Division Multiplexing / Offset Quadrature Amplitude Modulation* »).

ETAT DE LA TECHNIQUE

Les systèmes de transmission utilisent des modulations multi-porteuses pour atteindre une haute efficacité spectrale.

Une technique largement utilisée est la modulation OFDM (en anglais, « *Orthogonal Frequency Division Multiplexing* ») qui est basée sur une transformée de Fourier rapide (en anglais, « *Fast Fourier Transform* », (FFT)) pour répartir les sous-porteuses sur la largeur de bande du canal de transmission. Selon cette technique, l'ensemble des données appliqué à l'entrée du bloc IFFT et appelé symbole produit à la sortie de l'IFFT un bloc de signal à transmettre. Pour limiter les interférences entre chaque bloc successif un intervalle de garde est inséré.

Une autre technique multi-porteuses est la modulation FBMC (ou encore OFDM/OQAM). Cette technique a pour but de maximiser le débit en combinant l'utilisation de bancs de filtres pour diviser le canal de transmission en sous-canaux. Une telle technique est adaptée aux mêmes applications que l'OFDM.

En particulier, la modulation FBMC est bien adaptée à la radio opportuniste et plus généralement à la transmission d'information à haut débit dans une bande de fréquence limitée sur un environnement radiomobile.

La modulation FBMC est une solution alternative à l'OFDM car elle propose une meilleure efficacité spectrale grâce à une forme d'onde localisée en temps et en fréquence mais pour laquelle la propriété d'orthogonalité est perdue. Pour palier ce problème d'orthogonalité, en modulation FBMC on transmet des symboles OQAM au double du rythme symbole des OFDM à intervalle de garde et on relâche la condition d'orthogonalité au seul domaine réel.

Ainsi, la modulation FBMC est une solution intéressante aux nouvelles applications de radio opportuniste.

Un problème au déploiement de cette technique est la synchronisation, problème inhérent à toutes les modulations muti-porteuses.

De manière classique, pour synchroniser un émetteur et un récepteur, un signal préambule connu du récepteur est émis avant l'émission des données utiles. Ainsi, à partir d'un traitement du préambule le récepteur peut déterminer des paramètres de synchronisation : décalage temporel entre le signal émis et reçu et caractéristiques du canal de propagation.

On connait du document Fusco, T.; Petrella, A.; Tanda, M.: "Data-aided symbol timing and CFO synchronization for filter bank multicarrier systems," Wireless Communications, IEEE Transactions on, vol.8, no.5, pp.2705-2715, May 2009 une technique de synchronisation en temps et en fréquence au moyen d'un préambule.

La même technique est décrite plus en détail dans le document A. Petrella, « Synchronization algorithms for FBMC systems », thèse de doctorat, Université Frederic II de Naples, 2008/2009 consacré aux techniques de synchronisation des formes d'onde de type FBMC. Cette technique reprend les principes fondamentaux utilisés en OFDM et résumés par exemple dans le document Morelli, M.; Kuo, C.-C.J.; Pun, M.-0.;, "Synchronization Techniques for Orthogonal Frequency Division Multiple Access (OFDMA): A Tutorial Review," Proceedings of the IEEE , vol.95, no.7, pp.1394-1427, July 2007

Les techniques décrites sont toutes fondées sur un pic d'amplitude d'une fonction d'intercorrélation du signal reçu.

L'article STITZ T H ET AL: "Practical issues in frequency domain synchronization for filter bank based multicarrier transmission", communications, control and signal processing, isccsp 2008, ieee, 12 mars 2008, décrit une analyse par bancs de filtres de manière à extraire le préambule dans le domaine fréquentiel qui est ensuite traité pour obtenir des données d'estimation du canal.

Toutefois, ces techniques conduisent à des performances, en réception, éloignées de la limite de Cramer-Rao particulièrement sur des canaux à trajets multiples.

Ainsi, s'agissant de la synchronisation dans le cadre d'une modulation FBMC et en particulier OFDM/OQAM aucune technique connue ne donne de résultat satisfaisant.

PRESENTATION DE L'INVENTION

L'invention propose une solution de synchronisation appliquée à la modulation FBMC et en particulier à la modulation OFDM/OQAM.

Pour ce faire elle met en oeuvre une synchronisation au moyen d'un préambule dans le domaine fréquentiel.

Ainsi, selon un premier aspect, l'invention concerne un procédé de traitement d'un signal reçu, d'un émetteur multi-porteuses à bancs de filtres, par un récepteur multi-porteuses à bancs de filtres, le procédé comprenant les étapes suivantes :

- réception du signal multi-porteuses, généré selon une synthèse par banc de filtres de plusieurs sous-suites de symboles OQAM, le signal reçu comprenant un préambule de synchronisation connu du récepteur ;

- analyse par banc de filtres du signal reçu de manière à extraire le préambule dans le domaine fréquentiel ;
- traitement du préambule ainsi obtenu pour obtenir des données d'estimation d'un canal de propagation situé entre l'émetteur et le récepteur.

Le procédé selon l'invention permet une synchronisation plus robuste que les techniques de l'état de la technique.

Le procédé selon l'invention présente de très bonnes performances dans des conditions de canal Gaussien mais aussi dans des conditions de canal à trajets multiples.

Selon un mode de réalisation mettant en oeuvre une transformée de Fourier inverse pour le calcul de la réponse impulsionnelle du canal le bruit est avantageusement réparti sur tous les points alors que la puissance du canal est répartie seulement sur certains points.

Selon un autre mode de réalisation, la transformée de Fourier en réception (FFT) peut notamment être partagée avec la transformée de Fourier inverse nécessaire au calcul de la réponse impulsionnelle du canal, le coût d'implémentation de la technique est alors très faible.

Le procédé peut-être utilisé pour l'estimation du canal ainsi que l'erreur résiduelle de fréquence porteuse.

De manière avantageuse, la répétition d'une séquence de type BPSK pour la génération du préambule permet de contrôler de façon simple sans autres contraintes l'interférence générée sur la partie imaginaire du signal et facilite une implémentation peu complexe du procédé.

Le procédé selon le premier aspect de l'invention peut en outre présenter l'une ou l'autre des caractéristiques suivantes :

- l'étape de traitement consiste à : corréler le préambule avec un signal de référence pour obtenir un signal de corrélation ; déterminer, à partir du signal de corrélation et à partir de la réponse fréquentielle du canal de propagation, une estimée de la réponse temporelle du canal de propagation ;
- le préambule du signal est une suite de symboles BPSK émise en tant que préambule, la suite de symboles BPSK ayant été, à l'émission, pré-codée en OQAM ;
- le nombre de symboles BPSK est tel que le préambule comporte au moins deux, de préférence quatre symboles OQAM ;
- le signal de référence comporte une succession de symboles BPSK ou QPSK ;
- il comprend une étape d'émission consistant à : convertir une suite de données en un nombre de sous-suites égal au nombre de porteuses actives ; convertir chaque sous-suite en un ensemble de séquences de symboles OQAM ; appliquer à l'entrée d'un banc de filtres de synthèse les séquences de symboles OQAM de manière à obtenir un signal multi-porteuses à émettre ;
- il comprend, après la réception, du signal une étape de pré-synchronisation consistant à corréler le signal reçu avec sa réplique décalée dans le temps pour obtenir un décalage en fréquence et en temps entre le signal émis et reçu, l'analyse par bancs de filtres étant fonction des décalages ainsi obtenus ;
- l'analyse par banc de filtres consiste à obtenir plusieurs sous-suites de symboles constituant le préambule, le traitement du préambule consistant en outre à convertir la sous-suite de symboles en une suite de symboles ;
- les bancs de filtres comportent un module de transformée de Fourier rapide.

Et selon un second aspect, l'invention concerne un système de communications numériques comprenant des moyens pour la mise en oeuvre d'un procédé selon le premier aspect de l'invention.

PRESENTATION DES FIGURES

D'autres caractéristiques et avantages de l'invention ressortiront encore de la description qui suit laquelle est purement illustrative et non limitative et doit être lue en regard des dessins annexés sur lesquels :

- la figure 1 illustre un système d'émission/réception conforme à l'invention ;
- les figures 2a et 2b illustrent deux schémas d'émission/réception conformes à deux modes de réalisation de l'invention ;
- la figure 3 illustre un signal émis par le système d'émission de l'invention ;
- la figure 4 illustre la structure d'un paquet utilisé dans le système d'émission/réception de l'invention ;
- la figure 5 illustre un schéma de réception selon un mode de réalisation de l'invention ;
- la figure 6 illustre un schéma de réception selon un autre mode de réalisation de l'invention.

DESCRIPTION DETAILLEE DE L'INVENTION

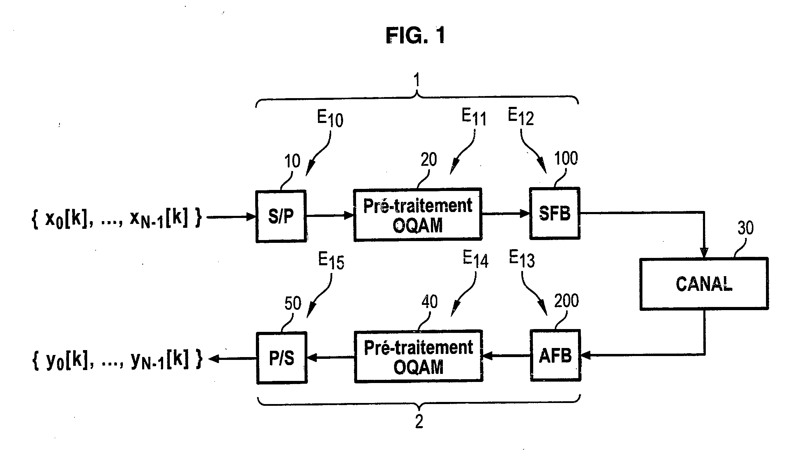

Un schéma bloc d'un système de communication multi-porteuse à banc de filtres (FBMC dans la suite), selon un mode de réalisation, est illustré sur la figure 1.

Un tel système comporte de manière classique un émetteur 1, un récepteur 2 et canal de transmission 30 situé entre l'émetteur 1 et le récepteur 2.

Au niveau de l'émetteur 1, à l'émission, un flux de N données $x_n[k]$ $n$ = [0, $N$ - 1] séries est appliqué E10 à un convertisseur 10 série/parallèle (S/P). Le flux parallélisé est alors appliqué E11 à un module 10 de pré-traitement OQAM dont la fonction est de convertir du domaine complexe au domaine réel de la modulation QAM (en anglais, « *Quadrature Amplitude Modulation* ») en bande de base. Les parties réelles et imaginaires sont entrelacées temporellement et multipliées par une séquence $\theta_k^n$. Deux types de séquences $\theta_k^n$ peuvent, par exemple, être utilisés.

La première est définie par $\theta_k^n = j^{(n+k)}$ et la seconde est définie par

$$\theta_k^n = \begin{cases} 1, j, 1, j, \dots & k \text{ pair} \\ j, 1, j, 1, \dots & k \text{ impair} \end{cases}.$$

En sortie du module 10 de prétraitement OQAM on obtient un bloc de symboles OQAM.

Les symboles OQAM sont appliqués E12 à l'entrée d'un banc de filtres de synthèse 100 (en anglais, « *Synthesis Filter Bank* », (SFB)) dont la fonction est de former un signal multi-porteuse à partir des symboles OQAM appliqués en entrée.

La sortie du banc de filtres de synthèse 100 est connectée au canal 30 de transmission qui délivre un signal reçu au récepteur 2.

La synthèse par banc de filtres consiste en *N* sur-échantillloneurs suivi de *N* filtres. Les signaux en entrée du banc 100 de filtres de synthèse sont en effet d'abord sur-échantillonnés par *N/2,* puis filtrés grâce aux filtres de synthèse de réponse impulsionnelle, $g_k[n]$. Le $k^{\text{ième}}$ filtre étant défini par :

$$g_k[n] = g[n] \cdot \exp\left( j \frac{2\pi k}{N} \left( n - \frac{L_p - 1}{2} \right) \right)$$

Le filtre $g[n]$ est appelé filtre prototype de la modulation FBMC et est de longueur $L_p$. En pratique il est conçu pour être de taille *KN-1, KN* ou *KN+1* où *K* est entier, en général, de valeur faible (3, 4 ou 5). Le filtre prototype est choisi pour que *g(n)* soit réel et que *g(n)\*g(-n)* soit un filtre de Nyquist (reconstruction parfaite) ou s'en approche (reconstruction presque parfaite), où \* est le produit de convolution. Dans ce cas le filtre prototype du filtre adapté est *g(-n).*

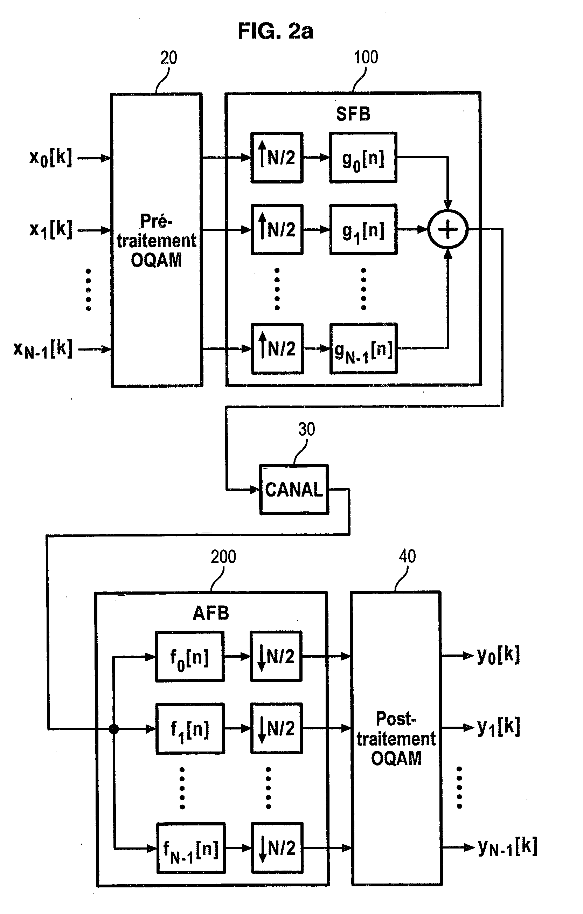

Le banc de filtres de la modulation FBMC permet de choisir la réponse fréquentielle de chaque porteuse et par conséquent la réponse fréquentielle totale du signal émis. La propriété d'orthogonalité entre porteuses est cependant perdue. Pour pallier le problème d'orthogonalité on transmet des symboles réels (OQAM) au double du rythme symbole des OFDM à intervalle de garde et on relâche la condition d'orthogonalité au seul domaine réel. La figure 2a illustre une telle synthèse par bancs de filtre.

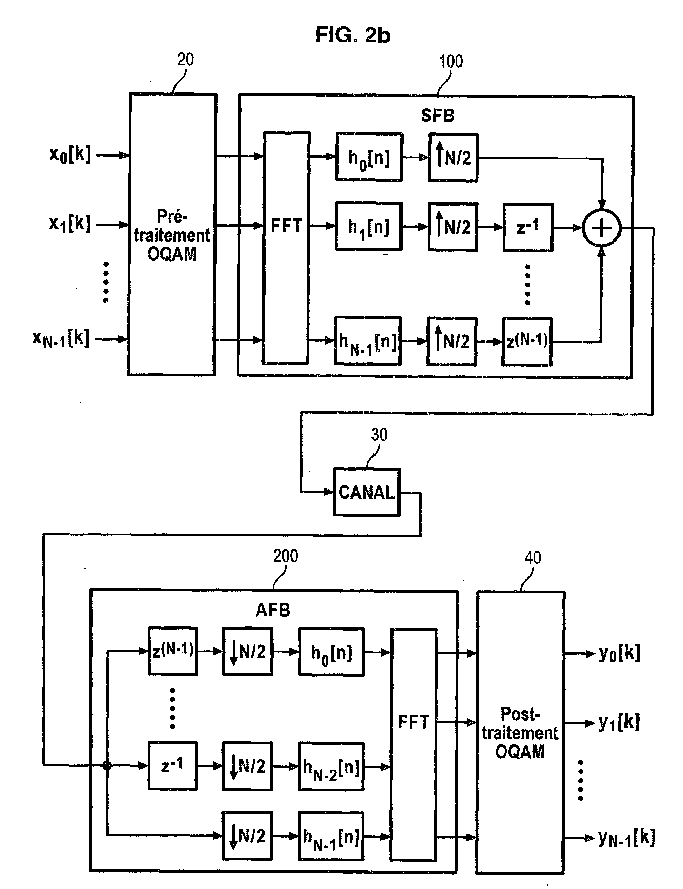

La même fonction peut être implémentée en utilisant une structure polyphasée suivi d'une transformée de Fourier. La figure 2b illustre une telle configuration. A noter que cette implémention montre également l'analogie entre l'OFDM classique et modulation FBMC et justifie l'appellation de modulation OFDM/OQAM.

Au niveau du récepteur 2, à la réception, le signal reçu est appliqué E13 à l'entrée d'un banc de filtres d'analyse 200 (en anglais, « *Analysis Filter Bank* », (AFB)). Bien entendu l'analyse par bancs de filtre est complémentaire à la synthèse par bancs de filtre effectuée à l'émission. Le filtre d'analyse $f_k[n]$ est le filtre adapté associé au filtre de synthèse $g_k[n]$.

On définit l'ensemble des N sorties du filtre d'analyse comme étant un symbole fréquentiel.

Suite à l'analyse par bancs de filtre du signal reçu, ce dernier est appliqué E14 à un module 40 de post-traitement OQAM qui a pour but de reconstruire un symbole QAM émis. Il s'agit L'opération inverse effectuée par le module 20 de pré-traitement OQAM.

En particulier, le post-traitement OQAM effectue après dérotation par le θ conjugué, une conversion de complexe à réel, c'est-à-dire que seule la partie réelle du signal est conservée, la partie imaginaire est rejetée. Il est à noter qu'en ne préservant que la partie réelle du signal, l'orthogonalité n'a besoin d'être préservée uniquement sur la partie réelle du signal, laissant libre les contraintes sur la partie imaginaire. L'orthogonalité peut dans ce cas être définie par le fait que le signal émis est reçu sans interférence après démodulation.

Enfin, une sérialisation E15 des symboles issus du module 40 de post-traitement OQAM est effectuée au moyen d'un convertisseur 50 parallèle série (S/P) pour obtenir un flux de *N* données $y_n[k]$ $n = [0, N-1]$ de sortie.

Pour une description plus détaillée de la technique d'émission/réception multi-porteuses à bancs de filtre on pourra se référer, par exemple, aux documents suivants :

- B. Hirosaki, "An Orthogonally Multiplexed QAM System Using the Discrete Fourier Transform," Communications, IEEE Transactions on , vol.29, no.7, pp. 982- 989, July 1981;
- P. Siohan, C. Siclet, N. Lacaille, "Analysis and design of OFDM/OQAM systems based on filterbank theory", IEEE Trans. On Signal Processing, vol. 50, no. 5, pp.1170-1183, May 2002.

De manière connue, le comportement du système de transmission FBMC en mode de transmission par paquet est impacté par la durée du filtre prototype (le filtre de mise en forme du banc de filtres de synthèse). Si on suppose que *Nb* blocs de N symboles doivent être transmis, le paquet émis commence par un temps de monté imposé par le filtre prototype de durée (*K-1*)/2 symboles blocs et un temps de descente de même durée, augmentant la durée du paquet de (K-1) symboles blocs.

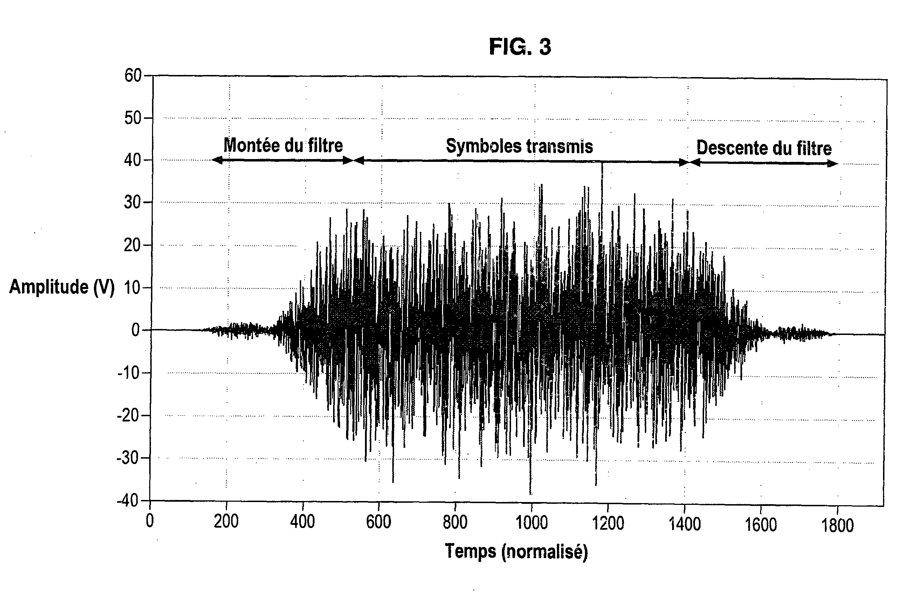

Un exemple de paquet est illustré sur à la figure 3.

Pour les transmissions par paquet, la synchronisation en temps et en fréquence ainsi que l'estimation des conditions de canal se fait en insérant avant les données utiles un préambule de synchronisation.

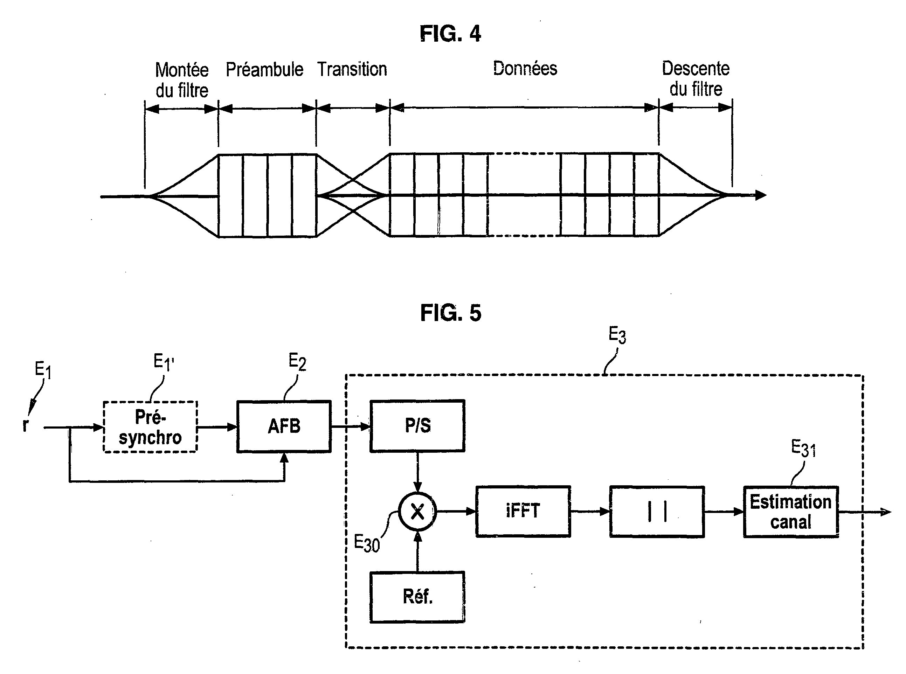

Pour éviter que les données utiles émises n'interfèrent avec le préambule il est nécessaire d'introduire un nombre de temps symboles de silence égale à (K-1)/2 entre le paquet de préambule et le paquet de données. La figure 4 illustre schématiquement la structure du paquet comportant le préambule de synchronisation suivi des symboles de transition (symboles de silence) et des symboles de données.

Ainsi, pour synchroniser l'émetteur 1 avec le récepteur 2, avant démodulation des données utiles, au niveau du récepteur une phase de synchronisation est mise en oeuvre.

Cette phase de synchronisation est communément appelée phase d'acquisition (en anglais, « *lock* ») tandis que la phase au cours de laquelle on démodule les données utiles est appelée phase de poursuite (en anglais « *tracking* »).

Cette phase de synchronisation va permettre au récepteur 2 de détecter le début du paquet afin de déterminer l'emplacement des données utiles. En particulier, les symboles du préambule sont traités pour :

- estimer la réponse fréquentielle du canal ;
- estimer le décalage temporel à partir de la réponse temporelle du canal (obtenue après passage dans le domaine temporel de la réponse fréquentielle estimée au moyen d'une iFFT).

De manière avantageuse la synchronisation est mise en oeuvre par une analyse du signal reçu dans le domaine fréquentiel.

Ainsi, contrairement aux techniques discutées en introduction, il n'y a pas besoin de mettre en place un dispositif fonctionnant indépendamment du banc de filtres d'analyse.

Pour effectuer la synchronisation, un signal multi-porteuse est reçu E1 de l'émetteur 1 par le récepteur 2. Ce signal comporte un préambule connu du récepteur 2.

Ce signal subit une analyse E2 par bancs de filtre afin d'extraire le préambule.

L'extraction du préambule est, comme on le comprend, effectuée dans le domaine fréquentiel puisqu'elle est mise en oeuvre après l'analyse en banc de filtres, contrairement aux techniques connues.

Ensuite, les symboles du préambule sont traités E3 pour obtenir des données d'estimation du canal de propagation 30 situé entre l'émetteur 1 et le récepteur 2.

Le traitement E3 consiste à opérer à l'inter-corrélation E30 dans le domaine fréquentiel, c'est-à-dire après analyse par le banc de filtre et avantageusement dé-rotation par le $\theta_k^{n^*}$ associé des symboles constituant le préambule avec un signal de référence.

En effet, en connaissant la séquence émise, il est possible d'estimer a priori la nature de la séquence reçue.

La séquence reçue n'est cependant pas simple dans le cas général et dépend de la séquence émise et du type de filtre utilisé, la structure ici décrite garantit l'orthogonalité uniquement sur la partie réelle du signal émis, c'est-à-dire la partie réelle du signal émis et la même que la partie réelle du signal reçu dans des conditions idéales de transmission.

Cependant l'interférence émise sur la partie imaginaire est fonction des symboles réels émis et du filtre d'émission.

En corrélant E30 terme à terme le symbole fréquentiel reçu avec le symbole émis on peut en déduire E31 une estimée de la réponse fréquentielle, du canal et ensuite une estimée de la réponse temporelle du canal par inverse FFT et donc le début du préambule.

De manière complémentaire, l'interférence générée peut-être contrôlée de façon simple lorsque l'on répète une même séquence BPSK en entrée du modulateur, à l'émission du signal, au niveau de l'émetteur 1.

Ainsi, on choisira de préférence un préambule constitué d'une suite de symboles BPSK que l'on code en OQAM. Pour obtenir de bonnes performances, le bloc de symboles BPSK répété plusieurs fois, au moins deux, de préférence quatre fois.

Le pré-traitement OQAM va étaler les symboles BPSK sur des porteuses non consécutives. Dans ce cas l'interférence générée sur les porteuses adjacentes est fonction du symbole BPSK émis sur les adjacents s'apparente à une QPSK.

De manière plus précise, si on note, $\varepsilon_k$, la séquence BPSK émise, pour $k = 0$ à $N$ où $N$ est le nombre de porteuses considérées. Par définition de la modulation BPSK, $\varepsilon_k$ peut prendre une valeur égale à -1 ou à 1. La conversion en OQAM (pré-traitement OQAM) avant multiplication par le facteur $\theta_k$ transforme cette séquence de préambule en deux sous séquences, $\chi_k^1$ et $\chi_k^2$, la première correspondant aux symboles pairs, la deuxième aux symboles impaires. On obtient par conséquent la propriété suivante :

$$\chi_k^1 = \begin{cases} \varepsilon_k & k \text{ pair} \\ 0 & k \text{ impair} \end{cases}$$

$$\chi_k^2 = \begin{cases} 0 & k \text{ pair} \\ \varepsilon_k & k \text{ impair} \end{cases}$$

Le signal reçu par le banc de filtres de synthèse, en l'absence de canal et de bruit en supposant une synchronisation parfaite, permet de construire la séquence assimilée QPSK de référence. Cette séquence avant le post-traitement OQAM (conversion des symboles OQAM vers des symboles QAM), mais après la dérotation par le facteur $\theta_k$, en deux sous-séquences $\psi_k^1$ et $\psi_k^2$, la première correspondant aux symboles pairs, la deuxième aux symboles impairs reçus, avec la propriété suivante :

$$\psi_k^1 \approx \begin{cases} \varepsilon_k + j\xi_k^1 & k \text{ pair} \\ j\xi_k^1 & k \text{ impair} \end{cases}$$

$$\psi_k^2 \approx \begin{cases} j\xi_k^2 & k \text{ pair} \\ \varepsilon_k + j\xi_k^2 & k \text{ impair} \end{cases}$$

Avec $\xi_k^1$ et $\xi_k^2$ pouvant prendre des valeurs de 0, -1, ou 1, et fonction de la séquence BPSK, $\varepsilon_k$, émise.

En présence de canal les séquences $\psi_k^1$ et $\psi_k^2$ sont alors filtrées et bruitées par le canal 30. On constate alors qu'en présence de canal , $H_k$, stationnaire durant la séquence d'apprentissage, la séquence reçu après FFT et après dérotation par $\theta_k^{n*}$, $\rho_k^n$ peut-être approximée par :

$$\rho_k^{2n} \approx H_k\left(\psi_k^1\right)e^{j\pi\Delta f 2n} \cdot e^{j\frac{2\pi k \Delta \tau}{T}} + \eta_k^{2n}$$

et

$$\rho_k^{2n+1} \approx H_k\left(\psi_k^2\right)e^{j\pi\Delta f(2n+1)} \cdot e^{j\frac{2\pi k \Delta \tau}{T}} + \eta_k^{2n+1}$$

où $\Delta f$ est l'erreur de fréquence résiduelle reçue après démodulation, $\Delta \tau$, l'erreur résiduelle liée au mauvais alignement du symbole fréquentiel. $T$ la durée d'un symbole fréquentiel, et $\eta_k^n$ un terme de bruit.

La corrélation de ce signal reçu par le signal de référence peut alors faire de façon trivial une corrélation dans le domaine fréquentiel, si $\rho_k^n$ est la séquence reçue après FFT et avant le post-traitement OQAM, mais après dérotation par $\theta_k^{n*}$, la formule suivante peut-être appliquée :

$$\Gamma_k^n = \rho_k^n \cdot \left(\psi_k^1\right)^* + \rho_k^{n+1} \cdot \left(\psi_k^2\right)^*$$

Compte tenu des valeurs triviales de $\psi_k^1$ et $\psi_k^2$, la valeur $\Gamma_k^n$ est une simple somme et ne demande le calcul d'aucun produit.

Le résultat peut alors être utilisé pour en déduire l'alignement du symbole fréquentiel et l'erreur en fréquence. En effet, $\Gamma_k^n$ successifs ($\Gamma_k^{n+1}$) peuvent permettre d'estimer l'erreur en fréquence résiduelle par produit complexe conjugué et somme sur les k porteuses actives. Une transformée de Fourier inverse peut-être appliquée sur les, $k$ de 0 a $M$, $\Gamma_k^n$, (ou sur la moyenne de plusieurs $\Gamma_k^n$) pour en déduire la réponse impulsionnelle du anal et donc le début exact du préambule. En effet la combinaison de $H_k$ et $e^{j\frac{2\pi k \Delta \tau}{T}}$ constitue après transformée inverse de Fourier en la réponse impulsionnelle du canal décalée de l'erreur d'alignement temporel du préambule.

En conséquence, la partie imaginaire du signal reçu dans des conditions de transmission idéales prends des valeurs très proches de 0, 1 ou -1. En outre, lorsque l'on émet un signal de type BPSK, certains coefficients du filtre prototype sont systématiquement multipliés par une valeur de OQAM nulle, due à la conversion BPSK vers OQAM.

Ainsi l'interférence causée à la porteuse adjacente est de module très proche de 0,5. Comme chaque porteuse possède deux porteuses adjacentes, l'interférence globale est de module 0 ou -1, 1 suivant que les interférences s'additionnent ou se soustraient.

Pour améliorer les performances, on peut mettre en oeuvre une pré-synchronisation E1' selon un procédé connu décrit dans par exemple dans les documents A. Petrella, « Synchronization algorithms for FBMC systems », thèse de doctorat, Université Frederic II de Naples, 2008/2009 et Morelli, M.; Kuo, C.-C.J.; Pun, M.-O., « Synchronization Techniques for Orthogonal Frequency Division Multiple Access (OFDMA): A Tutorial Review, » Proceedings of the IEEE , vo1.95, no.7, pp.1394-1427, July 2007.

Cette pré-synchronisation a pour effet de corriger l'erreur fréquentielle avant traitement du préambule dans le domaine fréquentiel pour effectuer la synchronisation fine de l'émetteur avec le récepteur.

La pré-synchronisation est donc une synchronisation grossière du récepteur 2.

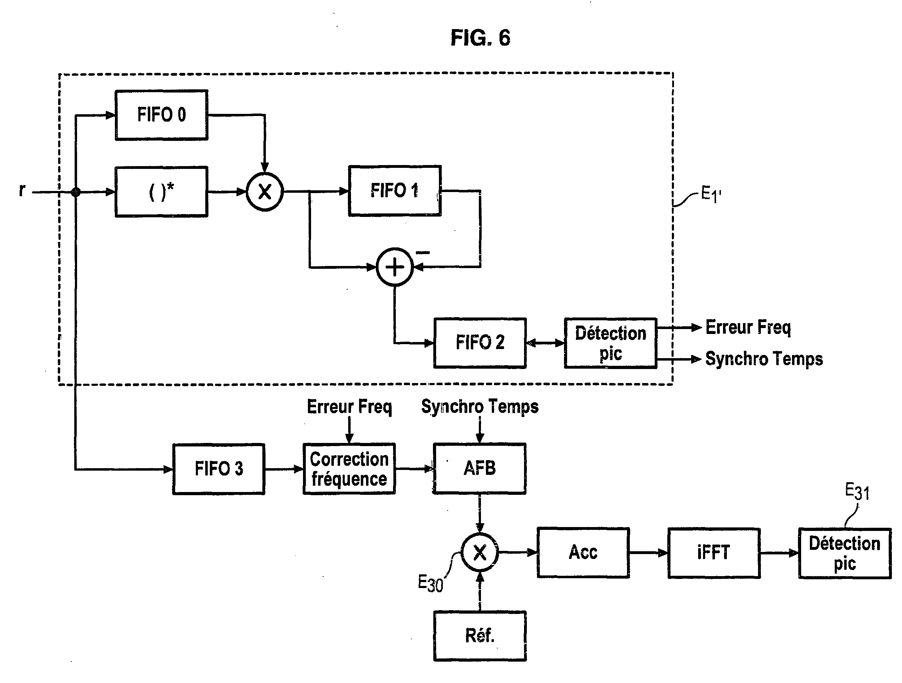

On a illustré sur la figure 6 une implémentation possible d'un procédé de synchronisation.

Le signal reçu $r$ est corrélé avec lui-même puis accumulé afin d'être mémorisé dans une mémoire de type FIFO (en anglais, « *First In First Out* »).

Un algorithme de détection de pic évalue si un début de paquet a été détecté. Il permet une estimation de l'erreur en fréquence (Erreur Freq) s'il y a eu détection en utilisant une des méthodes proposées dans l'un des documents cités ci-dessus. En outre, il permet une estimation d'un décalage temporel (Synchro Temps).

Après la détection, un deuxième chemin de données applique la correction de fréquence et procède à l'analyse par banc de filtres du signal en utilisant les informations de synchronisation grossière (Erreur Freq, Synchro Temps).Le signal est alors corrélé terme à terme avec le signal de référence et une estimée de canal dans le domaine fréquentiel en est déduite. L'estimée de canal est accumulée sur un ou plusieurs symboles OQAM et une transformée de Fourier rapide (iFFT) inverse lui est appliquée.

Le début exact de préambule peut-être détecté par détection E31 du pic d'amplitude de la réponse impulsionnelle de canal.

## Revendications

1. Procédé de traitement d'un signal reçu (r), d'un émetteur (1) multi-porteuses à bancs de filtres, par un récepteur (2) multi-porteuses à bancs de filtres, le procédé comprenant les étapes suivantes :

   - réception (E1) du signal multi-porteuses, généré selon une synthèse par banc de filtres de plusieurs sous-suites de symboles OQAM, le signal reçu comprenant un préambule de synchronisation connu du récepteur (2), ledit préambule du signal étant une suite de symboles BPSK émise en tant que préambule, la suite de symboles BPSK ayant été, à l'émission, précodée en OQAM ;
   - analyse (E2) par banc de filtres du signal reçu (r) de manière à extraire le préambule dans le domaine fréquentiel ;
   - traitement (E3) du préambule ainsi obtenu pour obtenir des données d'estimation d'un canal (30) de propagation situé entre l'émetteur et le récepteur.

2. Procédé de traitement selon la revendication 1, dans lequel l'étape de traitement (E3) consiste à :

   - corréler (E30) le préambule avec un signal de référence pour obtenir un signal de corrélation ;
   - déterminer (E31), à partir du signal de corrélation et à partir de la réponse fréquentielle du canal de propagation, une estimée de la réponse temporelle du canal de propagation.

3. Procédé de traitement selon l'une des revendications précédentes, dans lequel le nombre de symboles BPSK est tel que le préambule comporte au moins deux, de préférence quatre symboles OQAM.

4. Procédé de traitement selon l'une des revendications 2 à 3, dans lequel le signal de référence comporte une succession de symboles BPSK ou QPSK.

5. Procédé de traitement selon l'une des revendications précédentes comprenant une étape d'émission consistant à

   - convertir (E10) une suite de données en un nombre de sous-suites égal au nombre de porteuses actives ;
   - convertir (E11) chaque sous-suite en un ensemble de séquences de symboles OQAM ;
   - appliquer (E12) à l'entrée d'un banc de filtres de synthèse les séquences de symboles OQAM de manière à obtenir un signal multi-porteuses à émettre.

6. Procédé de traitement selon l'une des revendications précédentes comprenant, après la réception du signal une étape de pré-synchronisation (E1') consistant à corréler le signal reçu avec sa réplique décalée dans le temps pour obtenir un décalage en fréquence et en temps entre le signal émis et reçu, l'analyse par bancs de filtres étant fonction des décalages ainsi obtenus.

7. Procédé de traitement selon l'une des revendications précédentes dans lequel l'analyse par banc de filtres consiste à obtenir plusieurs sous-suites de symboles constituant le préambule, le traitement du préambule consistant en outre à convertir la sous-suite de symboles en une suite de symboles.

8. Procédé de traitement selon l'une des revendications précédentes, dans lequel les bancs de filtres (100, 200) comportent un module de transformée de Fourier rapide.

9. Système de communication numérique multi-porteuses à bancs de filtres comprenant un émetteur et un récepteur à bancs de filtres, le système de communication comprenant des moyens pour mettre en oeuvre un procédé selon l'une des revendications précédentes.

## Patentansprüche

1. Verfahren zur Verarbeitung eines von einem Filterbanken-Multiträger-Sender (1) empfangenen Signals (r) durch einen Filterbanken-Multiträger-Empfänger (2), wobei das Verfahren folgende Schritte aufweist:

   - Empfangen (E1) des Multiträgersignals, welches gemäß einer Synthese durch Filterbank von mehreren Unterfolgen von Zeichen OQAM erzeugt ist, wobei das empfangene Signal eine vom Empfänger (2) erkannte Synchronisationspräambel aufweist, wobei die Signalpräambel eine Folge von Zeichen BPSK ist, die als Präambel gesendet wird, wobei die Folge von Zeichen BPSK beim Senden in OQAM vorkodiert gewesen ist;
   - Analysieren (E2), durch Filterbank, des empfangenen Signals (r), derart, dass die Präambel im frequenziellen Bereich extrahiert wird;

- Verarbeiten (E3) der so gewonnenen Präambel zur Gewinnung von Schätzdaten eines Ausbreitungskanals (30), der zwischen dem Sender und dem Empfänger liegt.

2. Verarbeitungsverfahren nach Anspruch 1, bei welchem der Verarbeitungsschritt (E3) besteht aus:

- Korrelieren (E30) der Präambel mit einem Referenzsignal zur Gewinnung eines Korrelationssignals;
- Bestimmen (E31), ausgehend von dem Korrelationssignal und dem frequenziellen Verhalten des Ausbreitungskanals, einer Abschätzung des Zeitverhaltens des Ausbreitungskanals.

3. Verarbeitungsverfahren nach einem der vorstehenden Ansprüche, bei welchem die Anzahl von Zeichen BPSK so ist, dass die Präambel wenigstens zwei, vorzugsweise vier Zeichen OQAM aufweist.

4. Verarbeitungsverfahren nach einem der Ansprüche 2 bis 3, bei welchem das Referenzsignal eine Aufeinanderfolge von Zeichen BPSK oder QPSK aufweist.

5. Verarbeitungsverfahren nach einem der vorstehenden Ansprüche, welches einen Sendeschritt aufweist, der besteht aus:

- Umwandeln (E10) einer Datenfolge in eine Anzahl von Unterfolgen, die gleich der Anzahl von aktiven Trägern ist;
- Umwandeln (E11) einer jeden Unterfolge in eine Gesamtheit von Zeichensequenzen OQAM;
- Aufgeben (E12), auf den Eingang einer Synthesefilterbank, der Zeichensequenzen OQAM, derart, dass ein zu sendendes Multiträgersignal gewonnen wird.

6. Verarbeitungsverfahren nach einem der vorstehenden Ansprüche, aufweisend, nach Empfang des Signals, einen Schritt der Vorsynchronisation (E1'), der in einer Korrelation des empfangenen Signals mit seiner zeitlich versetzten Replik besteht, um eine Versetzung in Frequenz und Zeit zwischen dem gesendeten und dem empfangenen Signal zu gewinnen, wobei die Analyse durch Filterbanken eine Funktion der so gewonnenen Versetzungen ist.

7. Verarbeitungsverfahren nach einem der vorstehenden Ansprüche, bei welchem die Analyse durch Filterbank in einer Gewinnung von mehreren Unterfolgen von Zeichen, die die Präambel bilden, besteht, wobei die Verarbeitung der Präambel ferner darin besteht, die Unterfolge von Zeichen in eine Folge von Zeichen umzuwandeln.

8. Verarbeitungsverfahren nach einem der vorstehenden Ansprüche, bei welchem die Filterbanken (100, 200) ein Modul schneller Fourier-Transformation aufweisen.

9. Digitales Filterbanken-Multiträger-Kommunikationssystem, welches einen Filterbanken-Sender und einen Filterbanken-Empfänger aufweist, wobei das Kommunikationssystem Mittel zur Durchführung eines Verfahrens gemäß einem der vorstehenden Ansprüche aufweist.

**Claims**

1. A treatment process of a received signal (r) from a multi-carrier transmitter (1) with filter banks, by a multi-carrier receiver (2) with filter banks, the process comprising the following steps:

- receipt (E1) of the multi-carrier signal, generated according to synthesis by filter bank of several sub-strings of OQAM symbols, the received signal comprising a known synchronisation preamble from the receiver (2), said preamble of the signal being a sequence of BPSK symbols transmitted as preamble, the sequence of BPSK symbols having been pre-coded in OQAM on transmission, ;
- analysis (E2) by filter bank of the received signal (r) so as to extract the preamble in the frequency domain ;
- treatment (E3) of the resulting preamble to obtain estimation data of a propagation channel (30) located between the transmitter and the receiver.

2. The treatment process as claimed in Claim 1, in which the treatment step (E3) consists of:

- correlating (E30) the preamble with a reference signal to obtain a correlation signal ;
- determining (E31), from the correlation signal and from the frequency response of the propagation channel, an estimate of the time response of the propagation channel.

3. The treatment process as claimed in any one of the preceding claims, in which the number of BPSK symbols is such that the preamble comprises at least two, preferably four, OQAM symbols.

4. The treatment process as claimed in any one of claims 2 to 3, in which the reference signal comprises a succession of BPSK or QPSK symbols.

5. The treatment process as claimed in any one of the preceding claims comprising a transmission step consisting of

- converting (E10) a sequence of data into a number of sub-strings equal to the number of active carriers ;
- converting (E11) each sub-string into a set of sequences of OQAM symbols ;
- applying (E12) to the input of a synthesis filter bank the sequences of OQAM symbols to obtain a multi-carrier signal to be sent.

6. The treatment process as claimed in any one of the preceding claims comprising, after receipt of the signal, a pre-synchronisation step (E1') consisting of correlating the received signal with its rejoinder offset in time to obtain offsetting in frequency and in time between the transmitted signal and received signal, with analysis by filter banks being a function of the resulting offsettings.

7. The treatment process as claimed in any one of the preceding claims in which analysis by filter bank consists of obtaining several sub-strings of symbols constituting the preamble, the treatment of the preamble consisting also of converting the sub-string of symbols into a sequence of symbols.

8. The treatment process as claimed in any one of the preceding claims, in which the filter banks (100, 200) comprise a fast Fourier transform module.

9. A multi-carrier digital communications system with filter banks, comprising a transmitter and a receiver with filter banks, the communications system comprising means for executing a process as claimed in any one of the preceding claims.

FIG. 1

## FIG. 2a

## FIG. 2b

FIG. 3

**FIG. 4**

Montée du filtre | Préambule | Transition | Données | Descente du filtre

**FIG. 5**

**FIG. 6**

EP 2 503 750 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FUSCO, T. ; PETRELLA, A. ; TANDA, M.** Data-aided symbol timing and CFO synchronization for filter bank multicarrier systems. *Wireless Communications, IEEE Transactions on,* Mai 2009, vol. 8 (5), 2705-2715
- **A. PETRELLA.** Synchronization algorithms for FB-MC systems. *thèse de doctorat, Université Frederic II de Naples,* 2008
- **MORELLI, M. ; KUO, C.-C.J. ; PUN, M.-0.** Synchronization Techniques for Orthogonal Frequency Division Multiple Access (OFDMA): A Tutorial Review. *Proceedings of the IEEE,* Juillet 2007, vol. 95 (7), 1394-1427
- Practical issues in frequency domain synchronization for filter bank based multicarrier transmission. **STITZ T H et al.** communications, control and signal processing, isccsp 2008. 12 Mars 2008

- **B. HIROSAKI.** An Orthogonally Multiplexed QAM System Using the Discrete Fourier Transform. *Communications, IEEE Transactions on,* Juillet 1981, vol. 29 (7), 982-989
- **P. SIOHAN ; C. SICLET ; N. LACAILLE.** Analysis and design of OFDM/OQAM systems based on filterbank theory. *IEEE Trans. On Signal Processing,* Mai 2002, vol. 50 (5), 1170-1183
- **MORELLI, M. ; KUO, C.-C.J. ; PUN, M.-O.** Synchronization Techniques for Orthogonal Frequency Division Multiple Access (OFDMA): A Tutorial Review. *Proceedings of the IEEE,* Juillet 2007, vol. 95 (7), 1394-1427